# EUROPÄISCHE PATENTANMELDUNG

(11) **EP 0 761 689 A1**
(43) Veröffentlichungstag der Anmeldung: **12.03.1997**
(21) Anmeldenummer: 96112209.0
(22) Anmeldetag: 29.07.1996
(51) Int. Cl.: C08B 11/20, C08B 31/04

(54) **Thermoplastische biologisch abbaubare Polysaccharidderivate, Verfahren zu ihrer Herstellung und ihre Verwendung**

(30) Priorität: 10.08.1995 DE 19529410
(71) Anmelder: WOLFF WALSRODE AG, D-29655 Walsrode (DE)
(72) Erfinder: Engelhardt, Jürgen Dr., 29683 Fallingbostel (DE); Koch, Wolfgang, Dr., 29699 Bomlitz (DE); Szablikowski, Klaus, Dr., 29664 Walsrode (DE); Weber, Gunter, Dr., 29683 Fallingbostel (DE); Kalbe, Jochen, Dr., 42799 Leichlingen (DE); Koch, Rainhard, Dr., 51065 Köln (DE); Müller, Hanns-Peter, Dr., 51519 Odenthal (DE); Fink, Hans-Peter, Dr., 14513 Teltow (DE); Weigel, Peter, Dr., 14532 Kleinmachnow (DE)
(74) Vertreter: Braun, Rolf, Dr.

(57) **Zusammenfassung**

Die vorliegende Erfindung betrifft neue thermoplastische, biologisch abbaubare Polysaccharidetherester, wie z. B. Celluloseetherester oder Stärkeetherester, sowie die Herstellung solcher Mischpfropfpolymerisate aus Polysacchariden, Epoxiden und Dicarbonsäureanhydriden und deren Verarbeitung unter Zugabe von Weichmachern und/oder nach Zumischen von anderen biologisch abbaubaren Polymeren zu Fasern, Folien, Membranen und anderen Formkörpern.

## Beschreibung

Die vorliegende Erfindung betrifft neue thermoplastische, biologisch abbaubare Polysaccharidetherester, wie z. B. Celluloseetherester oder Stärkeetherester, sowie die Herstellung solcher Mischpfropfpolymerisate aus Polysacchariden, Epoxiden und Dicarbonsäureanhydriden und deren Verwendung, z. B. als Formteile, Folien oder Beschichtungen.

Die Erfindung betrifft ferner die vorteilhafte Verarbeitung dieser Mischpfropfpolymerisate zu Formkörpern, wie Fasern, Folien, Membranen und Spritzgußkörpern, durch Zugabe von Weichmachern und durch Mischen mit anderen biologisch abbaubaren Polymeren.

In der Literatur beschriebene Celluloseetherester, wie z. B. für magensaftresistente Tablettenverkapselungen, bestehen aus Celluloseethern, die in verschiedenen Verfahren mit Carbonsäureanhydriden zu deren Monoestern umgesetzt werden. (siehe C.J. Malm, Analytical Chemistry, 25(2), 1953, 245-249; C.J. Malm, Industrial and Engineering Chemistry, 49(1), 1957, 84-88; EP 219426 (06.10.86), DOS 2140996 (16.08.71)).

Je nach Anforderung können dabei durch Variation des Etherderivates, z. B. Methyl-, Ethyl-, Hydroxyethyl-, Hydroxypropyl-, Propyl-, Butylcellulose, oder auch Mischethertypen, wie Methylhydroxyethyl- oder Methylhydroxypropylcellulose, oder durch Wahl verschiedener Dicarbonsäureanhydride, wie Phthalsäure, Tetrahydrophthalsäure, Hexahydrophthalsäure, oder durch variierenden Substitutionsgrad dieser Substituenten, Eigenschaftsprofile eingestellt werden (siehe DOS 2140996 (16.08.71))

Bei dieser Produktklasse handelt es sich um aus organischen Lösemitteln oder aus Wasser applizierbare Lacksysteme zur Tablettenverkapselung.

Die biologische Abbaubarkeit eines Polysaccharidderivates ist abhängig von der Höhe des Substutitionsgrades jeder Saccharideinheit. (siehe J.G. Batelaan in The Handbook of Environmental Chemistry, Volume 3, Part F, Ed. O. Hutzinger, Springer-Verlag, 1992, 229-336; M.O. Wirick, Journal of Polymer Science, Part A-1, 6 (1968), 1705-1718. So sind alle technisch verfügbaren Cellulosederivate nur mit durchschnittlichen Substitutionsgraden kleiner als 1,0 biologisch abbaubar. Thermoplastizität ist dagegen bei bekannten Derivaten wie z. B. Celluloseacetat, erst mit Substitutionsgraden größer als 2,5 zu erzielen ( T. Eicher, in Ullmanns Encyklopädie der technischen Chemie, 4. Auflage, 9, 1975, 227-246).

Wenig modifizierte Polysaccharide sind in der Regel gut biologisch abbaubar, können jedoch technologische Anforderungen, wie z. B. Extrusionsfähigkeit auf herkömmlichen Extrusionsanlagen, Wasserdampffestigkeit und Wasserdichtigkeit oder mit Standard-Kunststoffen vergleichbare mechanische Eigenschaften, nicht erfüllen (K. Dormann, Zuckerind. 116(7), 1991, 620-623).

Thermoplastische und damit auch zu Formteilen, wie z. B. Folien, extrudierbare Polysaccharidderivate, die gleichzeitig vollständig biologisch abbaubar sind, existieren bis auf die in den älteren Patentanmeldungen DE-A 4 228 376 und DE-A 4 317 231 in beschriebenen Substanzen nicht.

Die Synthese der bekannten Polysacchariddicarbonsäurehalbester gelingt in Pyridin oder Essigsaure mit basischen Salzen wie Natriumacetat als Katalysator. Die Produkte sind nur aufwendig von diesen Lösemitteln zu befreien. Aufgrund der Korosionsförderung durch diese Lösemittel bedarf es speziell ausgelegter Anlagen zu ihrer Synthese. Von Vorteil wären hierzu Synthesen in organischen Standardlösungsmitteln.

Aufgabe der vorliegenden Erfindung ist die Synthese von neuartigen thermoplastischen, extrudierbaren und biologisch abbaubaren Polysaccharidetherestern durch Veresterung von Polysacchariden oder Polysaccharidethern mit Dicarbonsäureanhydriden, wie z. B. Phthalsäure oder Hexahydrophthalsäure, zu Monoestern und anschließender Umsetzung der freien Carboxylgruppe mit Alkylenoxiden wie Ethylenoxid oder Propylenoxid in organischen Standardlösungsmitteln.

Durch die anschließende Veresterung der freien Carboxylgruppe mit Alkylenoxiden soll die Thermostabilität und damit Extrudierbarkeit dieser Polysaccharidderivate erzielt werden. Hierbei soll gleichzeitig die biologische Abbaubarkeit erhalten bleiben.

Gegenstand der vorliegenden Erfindung sind somit thermoplastische und biologisch abbaubare Polysaccharidderivate aus Polysacchariden bzw. Polysaccharidethern, die mit cyclischen Dicarbonsäureanhydriden und Alkylenoxiden umgesetzt wurden, gemäß Anspruch 1.

Gegenstand der Erfindung ist weiterhin ein Verfahren zur Herstellung von derartigen thermoplastischen und biologisch abbaubaren Polysaccharidetherestern, das dadurch gekennzeichnet ist, daß das Polysaccharid bzw. der Polysaccharidether mit Alkalilauge oder organischen tertiären Aminen oder anorganischen, basischen Salzen aktiviert und dann in geeigneten organischen Lösungs- bzw. Suspensionsmitteln mit cyclischen Carbonsäureanhydriden zum Dicarbonsäurehalbester verestert wird, der dann mit weiterem Alkylenoxid in den entsprechenden Dicarbonsäurediester überführt wird.

Gegenstand der Erfindung ist darüber hinaus die Verarbeitung derartiger thermoplastischer und biologisch abbaubarer Polysaccharidetheerester zu Formkörpern, wie Fasern, Folien, Membranen und Spritzgußkörpern durch Extrusion oder Spritzgußtechnik, die dadurch gekennzeichnet ist, daß dem Polysaccharidetherester Weichmacher und/oder andere biologisch abbaubare Polymere zugemischt werden.

Die nach diesem Verfahren erfindungsgemäß herzustellenden Polysaccharidetherester lassen sich durch die allgemeine Struktur:
Polysaccharid-O-R

beschreiben, wobei Polysaccharid-O die substituierten OH-Gruppen einer polymeren Saccharideinheit repräsentieren und R entweder ein mono- und/oder polymerer Substituent der Struktur X ist:
X = -A-B-A'-
in der A und A' eine Polyetherkette folgender Struktur sind:
A = (-D-O)ₙ und A' = (-D-O)ₘH
in der D eine aliphatische oder aromatische verzweigte oder unverzweigte Kette mit 2 bis 11 C-Atomen bedeutet und n eine ganze Zahl gleich oder größer als 0 ist, m eine ganze Zahl gleich oder größer als 1 ist, und B eine Dicarbonsäure folgender Struktur ist: 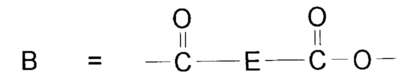 in der E ein aromatisches oder aliphatisches Kohlenstoffgerüst das gegebenenfalls mit weiteren Substituenten versehen sein kann ist, wobei das Verhältnis von A' zu B gleich oder größer 0,1 ist, oder R ist entsprechend dem Substitutionsgrad pro Saccharideinheit mit X gleich H (Wasserstoff) und/oder Alkyl mit 1 bis 4, vorzugsweise 1 bis 2 C-Atomen.

Zur Synthese wird das Polysaccharid mit Alkalilauge aktiviert. Diese Aktivierung kann durch die Synthese und Isolierung eines Alkalipolysaccharids geschehen oder alternativ durch Herstellung eines wasserfeuchten Alkalipolysaccharids oder einer Suspension des Polysaccharids in wassermischbaren Lösungsmitteln und anschließender Zugabe einer wässrigen Alkalilösung.

Hierzu können weiterhin aktivierende Behandlungen wie z. B. mit flüssigem Ammoniak oder Ultraschall hinzugezogen werden.

Vor Beginn der Veretherungs- und Veresterungsreaktion wird das Wasser und/oder lösemittelfeuchte Alkalipolysaccharid einer Lösemittelwäsche unterzogen, wodurch ein definierter Alkali-Gehalt eingestellt werden kann.

Ebenso kann die Aktivierung durch Aufsprühen einer wässrigen Alkali-Lauge vorgenommen werden. Auf die so aktivierte Cellulose wird das Epoxid aufgepfropft und vorzugsweise vor der Reaktion mit dem Dicarbonsäureanhydrid das im Reaktionsansatz vorhandene Wasser abdestilliert.

Die Reaktion mit den Dicarbonsäureanhydriden wird in Suspensionsmitteln durchgeführt. Hierbei ist es als überraschend anzusehen, daß das Dicarbonsäureanhydrid in einer Zweiphasen-Reaktion (flüssig-fest) mit dem Polysaccharid in organischen Standard-Lösemitteln reagiert, da vergleichbare Reaktionen nur in aktivierenden und stark quellenden Lösemitteln wie Essigsäure und Pyridin durchgeführt werden konnten.

Alternativ zur Aktivierung mit Alkalilauge kann die Umsetzung des Polysaccharids mit dem Dicarbonsäureanhydrid auch mit Aminen durchgeführt werden. Hierzu wird das Polysaccharid oder der alkalifreie Celluloseether im Suspensionsmedium mit dem Amin als Katalysator aufgerührt und zu dieser Suspension bzw. Lösung das Dicarbonsäureanhydrid hinzugegeben. Hierbei entsteht der Dicarbonsäuremonoester des Polysaccharids bzw. des Polysaccharidethers.

In Suspensionsmitteln wie DMSO, DMAc oder DMF geht das Produkt während der Umsetzung mit dem Dicarbonsäureanhydrid in Lösung.

Im nächsten Schritt wird die noch freie Carboxylgruppe des so entstandenen Dicarbonsäuremonoesters mit Alkylenoxiden umgesetzt. Dabei können die Mengenverhältnisse so gewählt werden, daß die freien Carbonsäuren vollständig oder nur teilweise mit Alkylenoxid umgesetzt werden. Ebenso können die freien Säuregruppen als Starter für einen polymeren Etheraufbau dienen.

Wurde zur Aktivierung Amin verwendet, dient es auch bei diesem Reaktionsschritt als Katalysator. Entsprechend können bei Alkaliaktivierung an dieser Stelle geringe Mengen Amin zugegeben werden.

Sind die so entstandenen Polysaccharidetherester im Suspensions- bzw. Lösungsmittel vollständig gelöst, können sie durch Destillation oder Fällung in Nichtlösemitteln wie z. B. Wasser oder Isopropanol isoliert werden.

Durch die vielfältigen Kombinationsmöglichkeiten der Substituenten bei verschiedenen Substitutionsgraden lassen sich die Eigenschaften der Polysaccharidetherester in einem breiten Spektrum variieren. So kann z. B. der Schmelzbereich zwischen 80 und 250°C eingestellt werden.

Dieser weit einstellbare Schmelzbereich ist überraschend und war für den Fachmann nicht vorhersagbar, da bekannte Polysacchariddicarbonsäurehalbester wie z. B. Celluloseacetatphthalat oder Methylhydroxypropylphthalat bei Temperaturen größer als 180°C unter langsamer Zersetzung schmelzen und Hydroxyalkylpolysaccharide wie Hydroxypropylcellulose erst bei hohen Substitutionsgraden Schmelzbereiche zwischen 180 und 200°C aufweisen.

Durch die Veresterung der freien Carboxylgruppe sind diese Polysaccharidderivate im Gegensatz zu den bisher bekannten Dicarbonsäurehalbestern thermisch stabil und gut extrudierbar.

Weitere einstellbare Größen sind Löslichkeitsverhalten, Wasserdampfdurchlässigkeit und Schmelzviskosität.

Für die Synthese ist technisch zugängliche Cellulose, wie z. B. Holzzellstoff und Baumwollinters beliebigen Molgewichts oder andere zellstoffhaltige Produkte wie z. B. Sägespäne, geeignet. Weiterhin eignen sich native und lösliche Stärken beliebiger Provenienz und Vorbehandlung sowie Amylose, Amylopektin, Alginat, Glykogen, Carraghenat, Chitin, Chitosan, Guar als Splits oder Mehl, Johannisbrotkernmehl, Pektin, Xylan, Xanthan, Pullulan, Dextran und Laevan.

Hierbei ist es möglich zur Einstellung des Molgewichtes während der Behandlung mit Alkalihydroxiden einen oxidativen Kettenabbau durch Luftsauerstoff nach bekannten Verfahren durchzuführen, bei Cellulose sind die eingesetzten Faserlängen beliebig, bevorzugt kürzer als 2000µm, besonders bevorzugt kürzer als 1000µm.

Werden Polysaccharidether, insbesondere Celluloseether eingesetzt, eignen sich Celluloseether wie Methylcellulose oder Ethylcellulose oder Benzylcellulose mit durchschnittlichen Substitutionsgraden kleiner/gleich 2,5, Hydroxyethylcellulose, Hydroxypropylcellulose, Dihydroxypropylcellulose, Hydroxybutylcellulose, Methylhydroxyethylcellulose, Methylhydroxypropylcellulose, Methylhydroxybutylcellulose, Ethylhydroxypropylcellulose, Ethylhydroxyethylcellulose, Carboxyalkylcellulose, Sulfoalkylcellulose, Cyanoethylcellulose und deren Mischether.

Als Suspensions- bzw. Lösungsmittel eignen sich Ketone, Ether und cyclische Ether, Acetale, Kohlenwasserstoffe und polare aprotische Verbindungen wie Dimethylsulfoxid, Dimethylformamid, Dimethylacetamid, Dioxan, Tetrahydrofuran, N-Methylmorpholin, N-Methylpyrolidon, N-Methylenmorpholin-N-oxid, Dimethoxyethan, Dimethoxymethan, Dimethylether, Diethylenglykoldimethylether.

Als Dicarbonsäureanhydride eignen sich Anhydride wie Phthalsäureanhydrid, Tetrahydrophthalsäureanhydrid, Hexahydrophthalsäureanhydrid, Maleinsäureanhydrid, Bernsteinsäureanhydrid, Trimellitsäureanhydrid und Isatosäureanhydrid.

Ebenso geeignet sind die Alkan- und Alkenylbernsteinsäureanhydride wie Hexyl-, Hexenyl-, Octyl-, Octenyl-, Nonyl-, Decyl-, Decenyl-, Dodecyl-, Dodecenyl-, Tetradecyl-, Tetradecenyl-, Hexadecyl-, Hexadecenyl-, Octadecyl-, Octadecenyl-, iso-Octadecyl-, iso-Octadecenyl-, Eicosyl- und Docosylbernsteinsäureanhydrid.

Als Epoxide eignen sich bevorzugt Monoepoxide wie Ethylenoxid, Propylenoxid, 1,2-Epoxybutan, 1,2-Epoxyhexan, 1,2-Epoxyoctan, 1,2-Epoxydecan, 1,2-Epoxydodecan, 1,2-Epoxyhexadecan, 1,2-Epoxyoctadecan, Stearinsäureglycidylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat, Allylglycidylether, Butadienmonoxid, Glycidol, 3-Glycidoxypropyltrimethoxysilan, 3-Glycidoxypropyltriethoxysilan, Di-N-Butylamino-2,3-epoxypropan, Diethyl-β,γ-epoxypropylphosphat, 4-(2,3-Epoxypropyl)morpholin, Styrotoxid und Phenoxypropylenoxid.

Die Aktivierung des Polysaccharids erfolgt mit Alkalilauge. Hierbei können verschiedene Methoden angewendet werden.

Zum einen kann die Alkalicellulose durch Behandlung der Cellulose mit wässriger Alkalilauge (Maischalkalisierung), anschließender Filtration und Trocknung hergestellt werden. Die Konzentration der Natronlaugelösung beträgt hierbei 5-50 Gew.-%, vorzugsweise 10-25 Gew.-%. Der Alkaligehalt der so hergestellten Alkalicellulose beträgt 0,1 bis 30 Gew.-%, vorzugsweise 1-15 Gew.-%.

Alternativ läßt sich die Behandlung des Polysaccharids mit wässriger Alkalilauge in einer Suspension des Polysaccharids in organischen Suspensionsmitteln wie z. B. Alkoholen, Ketonen oder Ethern vornehmen (Slurry-Verfahren).

Sowohl die in der Maischalkalisierung als auch die im Slurry-Verfahren dargestellten Alkalipolysaccharide können wie in EP 0093368 beschrieben mit Lösungsmitteln/-gemischen extrahiert werden. Hierdurch kann ungebundenes Alkali und überschüssiges Wasser aus dem Alkalipolysaccharid entfernt werden.

Alternativ kann das Polysaccharid bereits im Rührautoklaven mit wäßrigem Alkali behandelt und die Reaktion mit dem Epoxid direkt anschließend durchgeführt werden. Zur Umsetzung mit dem Dicarbonsäureanhydrid wird das im Reaktionsgemisch vorhandene Wasser vorzugsweise abdestilliert und das Alkalipolysaccharid im jeweiligen Lösemittel suspendiert.

Die Aktivierung des Polysaccharids kann alternativ zur Aktivierung mit Alkalilauge durch tertiäre Amine oder auch durch anorganische, basische Salze vorgenommen werden,

Als Amine eignen sich tertiäre Amine wie Trimethylamin, Triethylamin, Tributylamin, Tetramethylendiamin, Pyridin, N,N-Dimethylcyclohexyldiamin, N,N-Dimethylbenzylamin, 4-Pyrrolidinylpyridin, Permethyldiethylentramin, 1,4-Diazabicyclo(2.2.2)octan, 1,8-Diazabicyclo(5.4.0)undec-7-en, 1,5-Diazabicyclo(4.3.0)-non-5-en sowie beliebige Mischungen aus ihnen.

Hierbei ist die einzusetzende Menge an Amin abhängig vom vorhandenen Derivatisierungsgrad des Polysaccharids. Wird das Polysaccharid derivatisiert eingesetzt, z. B. als Hydroxyethyl- oder Hydroxypropyl-Derivat, reichen katalytische Mengen Amin zur Reaktion aus. Zur Umsetzung mit dem nativen Polysaccharid wird das Amin im molaren Verhältnis zum Polysaccharid von 0,1 bis 5, bevorzugt von 0,5 bis 3 eingesetzt.

Dienen basische Salze als Katalysator, eignen sich hierzu Salze wie Natriumcarbonat, Natriumacetat, Kaliumcarbonat, Kaliumacetat und Lithiumcarbonat.

Die zur Umsetzung des Polysaccharid/-derivates eingesetzten Katalysatoren bzw. Aktivatoren werden auch zur Reaktion der Carbonsäure mit den Alkylenoxiden verwendet.

Zur Umsetzung des Polysaccharids mit dem Epoxid beträgt die Reaktionstemperatur 20 bis 150°C, vorzugsweise 50 bis 120°C. Die Reaktionszeiten betragen 0,5 bis 5 Stunden, vorzugsweise 0,5 bis 1 Stunden.

Die Reaktionstemperatur des alkalischen oder aminaktivierten Celluloseethers mit dem Dicarbonsäureanhydrid beträgt 30 bis 150°C, vorzugsweise 50 bis 120°C. Die Reaktionszeiten betragen 0,5 bis 4 Stunden, vorzugsweise 0,5 bis 2 Stunden.

Die Reaktionstemperatur des intermediär entstehenden Polysacchariddicarbonsäurehalbesters mit dem Alkylenoxid beträgt 20 bis 150°C, vorzugsweise 40 bis 130°C, besonders bevorzugt 50 bis 120°C. Die Reaktionszeiten betragen 0,5 bis 16 Stunden, vorzugsweise 0,5 bis 8 Stunden, besonders bevorzugt 0,5 bis 4 Stunden.

Die nach dem erfindungsgemäßen Verfahren und erfindungsgemäß beschriebenen Polysaccharidetherester sind löslich in organischen Lösemitteln wie DMSO, DMAc, DMF, Dioxan, THF oder n-Butanol.

Weiterhin sind diese Verbindungen thermoplastisch und mit den herkömmlichen Verarbeitungstechniken wie Extrusion in z. B. Spritzgußformteile oder Folien überführbar.

Die erfindungsgemäßen Polysaccharidderivate sind geeignet zur Herstellung von biologisch abbaubaren Fasern, Folien, Membranen, Töpfen, Flaschen und anderen Formkörpern durch Extrusion, Extrusionsblasen oder Spritzgußverfahren. Dabei können die Eigenschaften auf verschiedene Weise variiert werden.

Eine Möglichkeit der Variation der Eigenschaften besteht in der Zugabe von Weichmachern. Geeignete Weichmacher sind u. a. Diethylphthalat, Diethylartrat, Dibutylphthalat, Tributylcitrat, Tributylphosphat, Triphenylphosphat, Triacetin, Tributyrin, Bis-(2-ethylhexyl)-adipat und Bis-(2-ethylhexyl)phthalat, wobei auch häufig eine Kombination mehrerer der genannten Weichmacher vorteilhaft ist. Als besonders geeignete Weichmacher, die eine deutliche Herabsetzung der Glastemperatur von ursprünglich > 50°C auf Werte unter Raumtemperatur bewirkung, erweisen sich Diethylphthalat, Tributylcitrat und Diethyltartrat.

Erfindungsgemäß können die Eigenschaften auch durch die Herstellung von Blends mit anderen biologisch abbaubaren polymeren Komponenten variiert werden. Als geeignete Blendkomponenten können u.a. Stärke, Cellulose, Poly-Lactid-Glycolid, Polyhydroxybuttersäure, Polyesteramide oder Polyurethane eingesetzt werden, wobei die jeweiligen Anteile in weiten Grenzen geändert werden können.

Als besonders vorteilhaft als Blendkomponente erweist sich der Einsatz der als nachwachsender Rohstoff sehr kostengünstigen Stärke. Überraschend zeigt sich nämlich, daß die Stärke für Polysaccharidetherester Weichmacherwirkung besitzt. Schon bei einem Zusatz von 20 % Stärke wird die Glastemperatur deutlich herabgesetzt. Da Polysaccharidetherester und Stärke praktisch in jedem Mischungsverhältnis mischbar sind, lassen sich auch Blends mit überwiegendem Stärkeanteil herstellen. Dabei zeigt sich überraschend, daß die starke Wasseraufnahme der Stärke, die in der Regel zur raschen Zerstörung der Formkörper führt und damit ihre Verwendungsfähigkeit sehr stark einschränkt, schon durch geringe Zusätze von Polysaccharidetherester erheblich reduziert wird. Bereits bei einem Anteil von 20 % Polysaccharidetherester sind derartige Blends weitgehend wasserfest. Sie können daher erfindungsgemäß eingesetzt werden u.a. für die Herstellung von Verpackungsfolien, Mulchfolien und Pflanztöpfen.

Überraschend zeigt sich weiterhin, daß auch ein Gemisch aus Polysaccharidetherester und Cellulose, insbesondere kurzfaserige Cellulose wie z. B. Zellstoff, in jedem Mischungsverhältnis extrusionsfähig ist und damit zu Folien und anderen Formkörpern verarbeitet werden kann. Der Vorteil liegt nicht nur in einer erheblichen Kostensenkung infolge des günstigen Preises des Zellstoffes, sondern erfindungsgemäß besonders darin, daß hier ein faserverstärkter Verbund mit erhöhter Festigkeit vorliegt.

Die vorteilhafte Verwendung des Polysaccaridetheresters unter Zugabe von Weichmachern und in Form von Blends bzw. Compounds wird durch die Beispiele 6 bis 9 verdeutlicht.

Diese Polysaccharidderivate sind biologisch abbaubar. Hierbei ist die biologische Abbaubarkeit unhabhängig vom Substitutionsgrad mit Dicarbonsäureester. Dies ist völlig überraschend, da bei allen bekannten Polysaccharidderivaten die biologische Abbaubarkeit mit zunehmendem Substitutionsgrad abnimmt.

Die erfindungsgemäßen Polysaccharidetherester zeichnen sich gegenüber den bekannten Polysacchariddicarbonsäurehalbestern durch eine Reihe von Vorteilen aus:
- Sie sind in einfachen Rührautoklaven des Stand der Technik zu synthetisieren.
- Der segmentierte Aufbau der neuen Polysaccharidetherester kann in einem Reaktionsgefäß durchgeführt werden.
- Die Derivatisierung kann in organischen Standard-Lösungsmitteln durchgeführt werden, wobei das entstehende Polysaccharidderivat gelöst wird.
- Die Derivate lassen sich als freifließende Pulver mit weit einstellbarem Schmelzbereich gewinnen.
- Die freifließenden Pulver sind auf herkömmlichen Extrudern thermoplastisch verarbeitbar.
- Es können in wirtschaftlicher Weise Folien und Formteile in hoher Qualität hergestellt werden.
- Die Folien sind und Formkörper sind geruchsfrei, wasserfest und erfüllen alle Anforderungen an das Leistungsprofil herkömmlicher Materialien.
- Die resultierenden Folien und Formkörper sind biologisch abbaubar.

Die Eigenschaft der biologischen Abbaubarkeit wird dabei wie folgt untersucht:
Je 100 mg des Polysaccharidetheresters werden in zwei Zentrifugenröhrchen eingewogen. Anschließend werden nacheinander 2,5 ml 0,3 M Kalium-Phosphat-Puffer pH 6,0 und 2,5 ml 0,3 M Natrium-Acetat-Puffer pH 6,0 zugesetzt. Käufliche Cellulasen, Esterasen, Amylasen und Lipasen aus unterschiedlichen Organismen werden gemischt und im oben genannten Puffer gelöst. Je einem der beiden Röhrchen wird das Enzymgemisch zugesetzt und dadurch die Inkubation gestartet. Die Röhrchen werden auf einem Schüttler bei 30°C für mehrere Stunden inkubiert. Anschließend wird das Polymer abzentrifugiert und aus dem Überstand eine Probe entnommen, in der die Menge an reduzierenden Zuckern bestimmt wird.

Der Nachweis reduzierender Enden erfolgt wie folgt:
Zu einem Teil 2,5 g 4-Hydroxybenzoesäurehydrazid in 50 ml 0,5M HCl werden 9 Teile 0,5 M NaOH gegeben. 3 ml dieser Lösung werden mit 0,1 ml der zu analysierenden zuckerhaltigen Lösung 5 Minuten in kochendem Wasser inkubiert. Die Extinktion der Lösung wird bei 410 nm gegen Wasser ermittelt.

Über eine mit Glucose erstellte Eichkurve wird die Menge an reduzierenden Enden (als Glucose) bestimmt, die durch die Aktivität der Enzyme neu entstanden sind. Der Wert muß um den in der Kontrolle ohne Enzyme korrigiert werden. Eine Substanz wird dann als abbaubar eingestuft, wenn die gleiche Glucosefreisetzung wie bei Holzzellstoff (20 µg Glucose/ ml -h) gefunden wird.

Test zur Ermittlung der Kompostierbarkeit:
Die zu testenden Verbindungen werden als Folien in 6x6 Diarahmen eingespannt und bei 80°C bis zur Gewichtskonstanz getrocknet. Anschließend werden sie in einem geeignetem Kasten in eine 2 cm hohe Mischung aus geschreddertem Blumenschnitt (1 Teil, w/w) und durchgerottetem Gartenkompost (2 Teile, w/w) eingelegt.

Zur Einstellung einer hohen Luftfeuchtigkeit werden wassergefüllte Kristallisierschalen auf das Kompostgemisch gestellt. Die gefüllten Kästen werden in einem Brutschrank für jeweils 4 Wochen nacheinander bei 60, 50 und 37°C inkubiert. Wasserverluste werden über den Gewichtsverlust bestimmt und ausgeglichen. Während der Inkubation wird regelmäßig der pH-Wert des Komposts gemessen. Wenn der gemessene Wert um mehr als eine Einheit von pH 7 abweicht, wird der Wasserverlust durch 100 mM Kalium-Phosphat pH 7,0 ausgeglichen. Nach jeweils 4 Wochen wird ein Ansatz abgebrochen, die Folien entnommen, gereinigt, bei 80°C bis zur Gewichtskonstanz getrocknet und fotografiert. Unmittelbar nach dem Trocknen wird der Gewichtsverlust der Folie durch erneutes Wiegen bestimmt.

In der vergifteten Kontrolle wird der Ansatz komplett bei 105°C getrocknet und das dabei verdampfte Wasser dann durch eine 0,1 %ige HgCl₂-Lösung ersetzt. Die Proben für die vergiftete Kontrolle werden vor dem Einbringen in das Kompostgemisch in die HgCl₂-Lösung eingelegt und dann getrocknet. Der Kontrollansatz wird genauso inkubiert wie die zu testenden Ansätze. Eine Substanz wird dann als abbaubar eingestuft, wenn nach 12 Wochen im unvergifteten Ansatz keine Probensubstanz mehr nachzuweisen, die Probe im vergifteten Ansatz jedoch unverändert ist.

Die neuen erfindungsgemäßen Polysaccharidetherester eignen sich zur Herstellung von Formteilen wie z. B. Flaschen, Blumentöpfen, Einmalbesteck und -geschirr, Golf-Tees, Folien zur Verpackung von Lebensmitteln und Bioabfällen, Mulchfolien, Babywindeln usw. Durch Zusatz von Weichmachern und durch Herstellung von Blends können ihre Eigenschaften in weiten Grenzen variiert und damit die Einsatzmöglichkeiten erweitert werden. Weiterhin sind sie geeignet zur Beschichtung von Flächengebilden wie z. B. Papier, Fließen, Geweben, Gewirken oder anderen Substraten oder auch zur Herstellung von Fasern und Laminaten. Entsprechende Materialien sind auch z. B. dem Papier-Recycling zugänglich.

Der Gegenstand der vorliegenden Erfindung soll anhand der vorliegenden Beispiele noch näher erläutert werden.

### Beispiele

### Beispiel 1

10,77 g Hydroxypropylcellulose (MS = 0,92) werden in 300 g Dioxan mit 0,2 ml 1,8-Diazabicyclo(5.4.0)undec-7-en bei 60°C 0,5 Stunden gerührt. Zu dieser Suspension werden 37 g Phthalsäureanhydrid gelöst in 50 g Dioxan hinzugetropft und bei 60°C eine Stunde gerührt. Der Reaktionsansatz wird auf 80°C geheizt. Es werden 43,5 g Propylenoxid zugetropft und 4 Stunden bei 80°C gerührt. Hierbei entsteht eine Lösung des Celluloseetheresters in Dioxan. Anschließend wird die Lösung in 1,5 l Isopropanol eingerührt und das ausgefallene Produkt filtriert und mit Isopropanol gewaschen. Der Erweichungspunkt liegt bei 130°C. Der über Festkörper-NMR bestimmte Substitutionsgrad beträgt 1,7 Mol Phthalsäure und 2,75 Mol Propylgruppen pro Glucoseeinheit. Im Enzymtest wird eine Glucosefreisetzung der bei 60°C vorinkubierten Probe von 85,19 µg Glucose/ ml -h gefunden. Im Kompostiertest ist die Probe nach vier Wochen vollständig abgebaut.

### Beispiel 2

9,68 g Hydroxyethylcellulose (MS = 0,72) werden in 300 g Dimethylsulfoxid mit 0,2 ml 1,8-Diazabicyclo(5.4.0)undec-7-en bei 60°C 0,5 Stunden gerührt. Zu dieser Suspension werden 37 g Phthalsäureanhydrid gelöst in 50 g Dimethylsulfoxid hinzugetropft und bei 60°C eine Stunde gerührt. Der Reaktionsansatz wird auf 80°C geheizt. Es werden 43,5 g Propylenoxid zugetropft und 4 Stunden bei 80°C gerührt. Hierbei entsteht eine Lösung des Celluloseetheresters in Dimethylsulfoxid. Anschließend wird die Lösung in 1,5 l Isopropanol eingerührt und das ausgefallene Produkt filtriert und mit Isopropanol gewaschen. Der Schmelzpunkt liegt bei 110°C. Der über Festkörper-NMR bestimmte Substitutionsgrad beträgt 2,0 Mol Phthalsäure und 2,3 Mol Propylgruppen pro Glucoseeinheit. Im Enzymtest wird eine Glucosefreisetzung der bei 60°C vorinkubierten Probe von 80,1 µg Glucose/ml -h gefunden. Im Kompostiertest ist die Probe nach vier Wochen vollständig abgebaut.

### Beispiel 3

8,1 g Weizenstärke und 15,15 g Triethylamin werden in 300 g Dimethylsulfoxid bei 60°C 0,5 Stunden gerührt. Anschließend werden 37 g Phthalsäureanhydrid in 50 g Dimethylsulfoxid zugetropft und eine Stunde bei 60°C gerührt. Der Reaktionsansatz wird auf 80°C geheizt und 43,5 g Propylenoxid zugetropft und 1 Stunde bei 80°C gerührt. Anschließend wird die Lösung in 1,5 l Aceton eingerührt und das ausgefallene Produkt filtriert und mit Aceton gewaschen. Der Erweichungspunkt liegt bei 155°C. Der über Festkörper-NMR bestimmte Substitutionsgrad beträgt 2,3 Mol Phthalsäure und 1,01 Mol Propylgruppen pro Glucoseeinheit. Im Enzymtest wird eine Glucosefreisetzung der bei 60°C vorinkubierten Probe von 91,25 µg Glucose/ ml -h gefunden. Im Kompostiertest ist die Probe nach vier Wochen vollständig abgebaut.

### Beispiel 4

8,1 g Baumwollinters und 15,15 g Triethylamin werden in 300 g Dimethylsulfoxid bei 60°C 0,5 Stunden gerührt. Anschließend werden 38,5 g Hexahydrophthalsäureanhydrid in 50 g Dimethylsulfoxid zugetropft und 2 Stunden bei 60°C gerührt. Der Reaktionsansatz wird auf 80°C geheizt und 43,5 g Propylenoxid zugetropft und 1 Stunde bei 80°C gerührt. Anschließend wird die Lösung in 1,5 l Isopropanol eingerührt und das ausgefallene Produkt filtriert und mit Isopropanol gewaschen. Der Schmelzpunkt liegt bei 120°C. Der über Festkörper-NMR besummte Substitutionsgrad beträgt 3,0 Mol Hexahydrophthalsäure und 3,0 Mol Propylgruppen pro Glucoseeinheit. Im Enzymtest wird eine Glucosefreisetzung der bei 60°C vorinkubierten Probe von 70,6 µg Glucose/ ml -h gefunden. Im Kompostiertest ist die Probe nach vier Wochen vollständig abgebaut.

### Beispiel 5

1084 g Baumwollinters werden in 22,5 l Isopropanol und 2,5 l Wasser und 0,63 kg NaOH-Plätzchen 90 Minuten bei 25°C alkalisiert. Anschließend wird mit 10 l Isopropanol/Wasser (80/20) gewaschen und zentrifugiert und nochmals mit 10 l Isopropanol aufgerührt und zentrifugiert. Die so hergestellte Alkalicellulose besitzt einen Alkaligehalt von 6,8%.
Zu 130,1 g der so gewonnenen Alkalicellulose werden im Rührautoklaven 49 g Ethylenoxid unter Stickstoffatmosphäre zudosiert und 1,5 Stunden bei 50°C gerührt. Dem Reaktionsansatz werden anschließend 1000 ml Dimethylacetamid und 205 g Tetrahydrophthalsäure zugesetzt und der Ansatz 1,5 Stunden bei 60°C gerührt. Der Reaktionsansatz wird auf 80°C geheizt und 215 g Propylenoxid zugetropft und 1 Stunde bei 80°C gerührt. Anschließend wird die Lösung in 10 l Isopropanol eingerührt und das ausgefallene Produkt filtriert und mit Isopropanol gewaschen. Der Erweichungspunkt liegt bei 160°C. Der über Festkörper-NMR bestimmte Substitutionsgrad beträgt 2,2 Mol Tetrahydrophthalsäure und 1,8 Mol Propylgruppen pro Glucoseeinheit. Im Enzymtest wird eine Glucosefreisetzung der bei 60°C vorinkubierten Probe von 68,83 µg Glucose/ ml -h gefunden. Im Kompostiertest ist die Probe nach vier Wochen vollständig abgebaut.

### Beispiel 6

Hydroxypropylcellulosephthalat (HPCP), gekennzeichnet durch die NMR-spektroskopisch bestimmten Substitutionsparameter MS^{HP} = 2.0 und DS^{Phthalat} = 0,9, mit Zusatz von Tributylphosphat und Glycerin als Weichmacher wird in einem Extruder bei einer Temperatur von 160°C zu Blasfolien verarbeitet.

Die Folien besitzen die folgenden Eigenschaften:

| | |
|---|---|
| Festigkeit: | 14,5 MPa |
| Bruchdehnung: | 4,0 % |
| Modul: | 580 MPa |
| Glastemperatur: | >50°C |

### Beispiel 7

Dem HPCP-Ansatz entsprechend Beispiel 6 wird eine Stärkemischung, bestehend aus Kartoffelstärke, Maisstärke und Weichmachern, im Gewichtsverhältnis 1:1 hinzugesetzt. Die HPCP-Stärke-Mischung wird entsprechend Beispiel 6 zu Blasfolien verarbeitet

Die Folien besitzen die folgenden Eigenschaften:

| | |
|---|---|
| Festigkeit: | 10,2 MPa |
| Bruchdehnung: | 9,4 % |
| Modul: | 280 MPa |
| Glastemperatur: | 25°C |

### Beispiel 8

Wie Beispiel 7 mit einem Gewichtsverhältnis der HPCP-Mischung zur Stärkemischung von 1:3.

Die Folien besitzen die folgenden Eigenschaften:

| | |
|---|---|
| Festigkeit: | 7,8 MPa |
| Bruchdehnung: | 14,5 % |
| Modul: | 210 MPa |
| Glastemperatur: | 20°C |

## Patentansprüche

1. Thermoplastische und biologisch abbaubare Polysaccharidetherester, die dadurch gekennzeichnet sind , daß sie sich durch die allgemeine Struktur
Polysaccharid-O-R
beschreiben lassen, wobei Polysaccharid-O die substituierten OH-Gruppen einer polymeren Saccharideinheit präsentieren und R entweder ein mono-und/oder polymerer Substituent der Struktur X ist:
X = -A-B-A'-
in der A und A' eine Polyetherkette folgender Struktur sind:
A = (-D-O)ₙ und A' = (-D-O)ₘH
in der D eine aliphatische verzweigte oder unverzweigte Kette mit 2 bis 11 C-Atomen bedeutet und n eine ganze Zahl gleich oder größer als 0 ist, und m eine ganze Zahl gleich oder größer als 1 ist, und B eine Dicarbonsäure folgender Struktur ist: 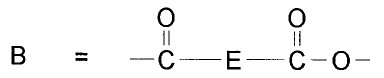 in der E ein aromatisches oder aliphatisches Kohlenstoffgerüst das gegebenenfalls mit weiteren Substituenten versehen sein kann ist, wobei das Verhältnis von A' zu B gleich oder größer 0,1 ist, oder R ist entsprechend dem Substitutionsgrad pro Saccharideinheit mit X gleich H (Wasserstoff) und/oder Alkyl mit 1 bis 4, vorzugsweise 1 bis 2 C-Atomen.

2. Thermoplastische und biologisch abbaubare Polysaccharidetherester gemäß Anspruch 1, dadurch gekennzeichnet, daß sie pro Mol Polysaccharideinheit 0,1 bis 6,5 Mol Alkylether und 0,1 bis 3,0 Mol Dicarbonsäureester enthalten.

3. Verfahren zur Herstellung thermoplastischer und biologisch abbaubarer Polysaccharidester gemäß Anspruch 1 oder 2, dadurch gekennzeichnet, daß das Polysaccharid oder das Polysaccharidderivat mit Alkalilauge, oder tertiären Aminen oder basischen anorganischen Salzen aktiviert wird und in Suspensions- bzw. Lösungsmitteln zuerst mit Dicarbonsäureanhydriden und anschließend mit Epoxiden zur Reaktion gebracht wird.

4. Verfahren nach Anspruch 3, dadurch gekennzeichnet, daß das Polysaccharid durch Behandlung mit wässriger NaOH oder Mischungen aus wässriger NaOH mit wasserlöslichen organischen Lösungsmitteln oder durch tertiäre Amine in organischen Lösungsmittel oder durch anorganische, basische Salze in organischen Lösungsmitteln voraktiviert wird.

5. Verfahren nach den Ansprüchen 3 oder 4, dadurch gekennzeichnet, daß die gewonnenen Polysaccharidetherester durch Fällung in Wasser oder einem organischen Lösemittel oder durch Entfernen der Reaktionslösung isoliert werden.

6. Fasern, Folien, Membranen und Formteile, dadurch gekennzeichnet, daß sie durch Extrusion, Extrusionsblasen oder Spritzgußtechnik hergestellt werden und mindestens zu 10 % aus Polysaccharidetherester gemäß Anspruch 1 und 2 bestehen.

7. Fasern, Folien, Membranen und Formteile gemäß Anspruch 6, dadurch gekennzeichnet, daß dem Polysaccharidetherester Weichmacher zugesetzt werden.

8. Fasern, Folien, Membranen und Formteile gemäß Anspruch 7, dadurch gekennzeichnet, daß als Weichmacher u.a. Diethylphthalat, Dibutylphthalat, Diethyltartrat, Tributylcitrat, Tributylphosphat, Triphenylphosphat, Diphenylethylhexylphosphat, Triacetin, Tributyrin, Bis-(2-ethylhexyl)-adipat und Bis-(2-ethylhexyl)phthalat oder Mischungen derselben verwendet werden.

9. Fasern, Folien, Membranen und Formteile gemäß Anspruch 6, dadurch gekennzeichnet, daß zu ihrer Herstellung Blends aus Polysaccharidetherester mit anderen biologisch abbaubaren Polymeren, wie Stärke, Cellulose, Poly-Lactid-Glycolid, Polyhydroxybuttersäure, Polyesteramide, Polyurethane u. a. verwendet werden.

10. Fasern, Folien, Membranen und Formteile gemäß Anspruch 9, dadurch gekennzeichnet, daß als Blendkomponente Stärke mit einem Anteil von mindestens 10 und höchstens 90 Gew.-%, vorzugsweise mindestens 20 und höchstens 80 Gew.-%, eingesetzt wird.

11. Fasern, Folien, Membranen und Formkörper gemäß Anspruch 10, dadurch gekennzeichnet, daß die Stärke als Weichmacher wirkt.

12. Fasern, Folien, Membranen und Formkörper gemäß Anspruch 10, dadurch gekennzeichnet, daß die Wasseraufnahme der Stärke stark herabgesetzt ist.

13. Fasern, Folien, Membranen und Formteile gemäß Anspruch 6, dadurch gekennzeichnet, daß als Zusatzkomponente Cellulose, insbesondere kurzfaserige Cellulose, z. B. Zellstoff, in beliebigem Mischungsverhältnis zugesetzt wird, wodurch eine Festigkeitserhöhung erzielt wird.
